# EUROPÄISCHE PATENTSCHRIFT

(11) **EP 1 655 570 B1**
(45) Veröffentlichungstag und Bekanntmachung des Hinweises auf die Patenterteilung: **18.05.2011**
(21) Anmeldenummer: 05110479.2
(22) Anmeldetag: 08.11.2005
(51) Int. Cl.: G01B 11/00, F27D 21/02, G01N 21/88

(54) **Verfahren zur optisch-geometrischen Vermessung eines Innenraumes einer Thermoprozessanlage**
Method for optically and geometrically surveying the inner space of a thermal processing unit
Procédé destiné à la mesure géométrique optique d'une cavité dans une installation de traitement thermique

(30) Priorität: 08.11.2004 DE 102004054538
(43) Veröffentlichungstag der Anmeldung: 10.05.2006
(73) Patentinhaber: Franke, Matthias, 01468 Moritzburg / OT Friedewald (DE)
(72) Erfinder: Franke, Matthias, 01468 Moritzburg / OT Friedewald (DE)
(74) Vertreter: Schneider, Henry

(56) Entgegenhaltungen:
- EP-A- 0 310 244
- EP-A- 0 686 860
- EP-A- 0 727 658
- EP-A- 1 473 350
- FR-A- 2 832 733
- US-A- 6 002 993
- US-B1- 6 229 563

## Beschreibung

Bei modernen Thermoprozessanlagen, wie z. B. bei Hochtemperaturanlagen der Glasindustrie, der Metallverarbeitung, der Metallurgie, der chemischen Industrie, der keramischen Industrie, Zementherstellung, der thermischen Abfallbehandlung sowie Energieerzeugung und -wandlung, werden heutzutage sehr hohe Anforderungen an die Anlagenverfügbarkeit und -effizienz gestellt. Um solche zu erfüllen, bedarf es neuer und verbesserter reproduzierbarer Inbetriebnahme- und Überwachungsmaßnahmen.

Als Beispiel sei der Bereich der Glasindustrie genannt, in welcher jede Reparatur an der Glasschmelzwanne, welche durch Schäden infolge einer unsachgemäßen Beheizung oder durch nicht erkannte Veränderungen an der Feuerfestzustellung z. B. durch Fugenveränderungen verursacht wird, dem Betreiber große Umsatzverluste bringt. Durch eine verbesserte, moderne Anlagenüberwachung können solche Verluste stark vermindert werden.

Die Zustandserfassung und Regelung industrieller Thermoprozessanlagen erfolgt oft über die Messung der eingetragenen Energie, der Temperaturen und Drücke sowie die Analyse der Abgase. Die Messung stellt zeitlich einen relativ trägen Vorgang zur tatsächlichen Reaktion dar und hat zur Folge, dass Störungen im Beheizungsablauf erst verspätet erkannt und zeitverzögert oft nur teilweise ausgeglichen werden können.

Vorteilhaft ist dagegen die direkte Inspektion der Innenraumverhältnisse in Thermoprozessanlagen, welche Aufschluss über die das Betriebsverhalten direkt beeinflussenden Prozessbedingungen (z. B. Beheizung und Schmelze oder Brenngut) bringt. Dazu eignen sich optische, berührungslos arbeitende Messtechniken, denn nur solche erlauben den zeitlich direkten und rückwirkungsfreien messtechnischen Zugriff auf die Prozesse im Brennraum der Thermoprozessanlage. Zielstellung der Vermessung ist zumeist nicht die Bestimmung der absoluten Größe von Messwerten, sondern bevorzugt die der Änderung gegenüber einem bekannten Vergleichswert.

Aus dem Stand der Technik sind solche Systeme zur optischen Inspektion von Ofenräumen bekannt. Die dafür benutzten Kameras werden teilweise gekapselt in den Ofenraum eingeführt, andere Systeme beobachten von außen durch ein spezielles Schauglas. Allerdings lassen die aus dem Stand der Technik bisher bekannten Systeme nur eine recht eingeschränkte Ofenrauminspektion in einem heißen, drucklosen und hinsichtlich Staub, Schlacke und Korrosion bzw. Verschleiß auslösender Gasbestandteile wenig belasteten Anlagenzustand zu. Die Systeme detektieren im sichtbaren Wellenlängenbereich und zum Teil im Infrarotbereich, und es werden relativ große Ofen-öffnungen zum Einführen der Systeme (Durchmesser >38 mm) benötigt. Die vorhandenen Systeme benötigen darüber hinaus einen größeren Aufwand hinsichtlich Kühlung und Spülung der Optik.

Erdgasflammen in industriellen Thermoprozessanlagen (Temperaturen <1000 °C) und die darin enthaltenen Verbrennungsradikale und Schadstoffe lassen sich mit diesen Systemen nur schwer beziehungsweise überhaupt nicht visualisieren, denn vor der leuchtenden Hintergrundstrahlung der Feuerräume heben sich die Erdgasflammen im sichtbaren Spektralbereich (400 bis 800 nm) kaum ab. In diesem Spektralbereich wird hauptsächlich die rußende Flammenstrahlung detektiert, welche bei der Erdgasverbrennung deutlich geringer ausfällt als zum Beispiel bei Kohlenstaub oder Ölfeuerung. Die Flammenbereiche, welche für den eigentlichen Wärmetransfer verantwortlich sind, können im sichtbaren Wellenlängenbereich nicht erfasst werden, da die für die Wärmeübertragung verantwortlichen Abgaskomponenten CO₂ und H₂O hauptsächlich im infraroten Spektralbereich oberhalb der Wellenlänge 1 µm Strahlung emittieren.

Die DE 198 29 670 offenbart eine Vorrichtung, welche ermöglicht, Gegenstände und insbesondere Glaskörper bei hoher Temperatur während der Bearbeitung berührungslos und genau zu vermessen. Quantitative Aussagen über Abstände und Distanzen sind hier nur über Gegenstände außerhalb des Ofenraumes möglich. Für Rückschlüsse auf die Betriebsfähigkeit einer Thermoprozessanlage ist die Vorrichtung nicht geeignet.

In US 6 002 993 wird die in einer Thermoprozessanlage generierte Strahlung vermessen, wobei dreidimensionalen Koordinaten bestimmt werden und ein bautechnisches Bezugsmerhmal zur Koordinatenfestlegung verwendet wird.

Es fällt auf, dass mit den vorhandenen Messmethoden nur begrenzt quantitative Informationen über das Innere einer Thermoprozessanlage gewonnen werden können. Es fehlt insbesondere die Möglichkeit, genaue Aussagen über die Geometrie des Ofenraumes sowohl unter realen Betriebsbedingungen als auch im instationären Zustand (beim Anfahren oder beim Abfahren des Betriebszustandes) zu treffen.

Aufgabe der Erfindung ist es deshalb, ein Verfahren bereitzustellen, welches eine berührungslose geometrische Vermessung des Prozessinnenraumes einer Thermoprozessanlage erlaubt.

Erfindungsgemäß wird diese Aufgabe mittels eines Verfahrens mit den im Anspruch 1 genannten Merkmalen gelöst.

Das erfindungsgemäße Verfahren ist ein Verfahren zur geometrischen Vermessung eines Innenraumes einer Thermoprozessanlage, wobei von einer Wandung des Ofenraumes der Thermoprozessanlage und/oder von im Innenraum der Thermoprozessanlage befindlichem Gut oder Materie generierte elektromagnetische Wellen erfasst werden,
mit folgenden Verfahrensschritten, wobei Verfahrensschritte a) und b) in umgekehrter Reihenfolge ausgeführt werden können:
a) Ermitteln der Position mindestens eines Bezugspunktes im Innenraum aufgrund von bautechnisch bekannten Daten,
b) Erstellen von mindestens zwei zweidimensionalen visuellen Darstellungen zumindest eines Teiles des Innenraumes mithilfe mindestens eines die elektromagnetischen Wellen zumindest teilweise detektierenden Abbildungsgerätes, wobei der Teil des Innenraumes wenigstens den Bezugspunkt und wenigstens einen wählbaren Punkt, dessen Position ermittelt werden soll, beinhaltet, und wobei die visuellen Darstellungen, aus verschiedenen Aufnahmerichtungen erstellt werden,
c) Ermitteln der dreidimensionalen Koordinaten des wählbaren Punktes im Innenraum durch Vergleich der Positionen der Abbildungen des wählbaren Punktes und des Bezugspunktes in den mindestens zwei visuellen Darstellungen.

Die für die Ausführung des erfindungsgemäßen Verfahrens detektierten elektromagnetischen Wellen können im sichtbaren Wellenlängenbereich (bevorzugt zirka 400 bis 950 nm), aber auch im Ultraviolettbereich (zirka 200 bis 400 nm bevorzugt 300 nm), oder auch im Infrarotbereich (größer 950 nm, bevorzugt 7 - 14 µm) liegen. Bei der visuellen Darstellung zumindest eines Teiles des Innenraumes kann es sich um ein Standbild, aber auch allgemein um ein Video oder dergleichen handeln. Durch die drei Verfahrensschritte erfolgt eine Berechnung der geometrischen Verhältnisse im Ofenraum, welche beispielsweise für eine Überwachung der Thermoprozessanlage benutzt werden kann. Die geometrische Vermessung des Ofeninnenraumes erfolgt berührungslos und kann unter realen Betriebsbedingungen ohne Prozessbeeinflussung für das notwendige Erkennen zeitabhängiger bautechnischer und prozesstechnischer Veränderungen (z. B. Veränderungen in der Feuerführung oder an der Feuerfestzustellung im Fugen- oder Öffnungsbereich) benutzt werden.

Die Grundidee des Verfahrens ist, dass wenigstens ein Bezugspunkt im Innenraum existiert, dessen Position man auf Grundlage von Ausgangs- oder Projektmaßen im Ofenbereich kennt. Die Projektmaße sind normalerweise als Bauabmessungen oder Aufmaß hinterlegt und dokumentieren den ursprünglichen Aufbau der Thermoprozessanlage, beispielsweise wie er bei Bauabnahme bestand. Der Bezugspunkt kann in ein äußeres Koordinatensystem eingetragen werden, welches sich auf die räumliche Lage der Thermoprozessanlage bezieht.

Der wählbare Punkt ist typischerweise Bestandteil eines Objektes im Innenraum, dessen Position, Orientierung, Größe oder dergleichen bei der angestellten Innenrauminspektion untersucht werden soll. Hier kann es sich um ein ruhendes Objekt handeln, beispielsweise im Rahmen einer geometrischen Vermessung des bautechnischen Zustandes des Innenraumes der Thermoprozessanlage (von Fugenbreiten, Bauteilgrößen, Öffnungen, Verschleißbereichen und anderem).

Ebenso kann das erfindungsgemäße Verfahren auch der geometrischen Vermessung eines bewegten Objekts dienen. Als Beispiele seien eine Vermessung der Flammenausbildung oder eine Bestimmung der Dimensionen von Brenngut, Stückgut, Schmelzgut oder Gemenge und Schmelzschaum genannt, also solchen Elementen, welche den Innenraum der Thermoprozessanlage prozesstechnisch durchlaufen.

Typischerweise ist der Bezugspunkt Bestandteil eines bekannten (Bezugs-)Objektes im Innenraum, insbesondere einer Fuge, Kante, Fläche, Öffnung oder dergleichen. Deshalb werden bevorzugt nicht nur der einzelne Bezugspunkt, sondern mehrere Bezugspunkte, welche Bestandteil des bekannten Objektes sind, der Vermessung zugrunde gelegt. Oft sind bautechnisch die Positionen von charakteristischen Linien, Geraden, Flächen oder dergleichen bekannt. Diese werden bevorzugt benutzt, um in der visuellen Darstellung ein Koordinatensystem zu hinterlegen.

Bei der Definition des Koordinatensystems wird bevorzugt die thermische Dehnung der Bauteile berücksichtigt, da die Bauteile der Thermoprozessanlage ihre Abmessungen durch Wärmedehnung im Betriebszustand im Vergleich zu ihrem ursprünglichen Zustand bei Bauabnahme ändern. Die Korrektur kann durch die Berücksichtigung eines Ausdehnungskoeffizienten für die betroffenen Materialen bei der ihnen ausgesetzten Temperatur hinreichend genau erfolgen.

Die bezüglich ihrer Wärmedehnung berichtigten Abmessungen bekannter Bauteile werden für die Kalibrierung des Koordinatensystems in der visuellen Darstellung benutzt. Nach Konstruktion des Koordinatensystems, welches zwei- oder dreidimensional sein kann, können unbekannte Betriebsmaße sowie die Position unbekannter Objekte ermittelt werden. Wenn eine visuelle Darstellung nur aus einer Aufnahmerichtung erstellt wird, ist im Allgemeinen die Bestimmung der dreidimensionalen Koordinaten eines unbekannten Punktes nur dann möglich, wenn weitere Informationen über seine Position bekannt sind, beispielsweise seine Lage auf einer durch eine Ofenwand definierten Ebene.

Es ist vorgesehen, dass die dreidimensionalen Koordinaten des wählbaren Punktes auf der Grundlage von wenigstens zwei visuellen Darstellungen berechnet werden, wobei die visuellen Darstellungen aus verschiedenen Aufnahmerichtungen erstellt werden. Wenn die Lage der hierbei benötigten Abbildungsgeräte bekannt ist und insbesondere der Abstand zwischen ihnen, kann die exakte räumliche Lage des Objektpunktes und somit sein dreidimensionaler Koordinatensatz unter Verwendung eines stereometrischen Verfahrens ermittelt werden. Durch wiederholte Anwendung dieses Verfahrens auf mehrere Objektpunkte und/oder von mehr Aufnahmestandpunkten aus wird ein dreidimensionales Modell des zu untersuchenden Objektes mit einem aus der Vermessungstechnik bekannten Verfahren erstellt. Bei bewegten Objekten werden die visuellen Darstellungen von zwei Abbildungskameras bevorzugt gleichzeitig erstellt.

Bevorzugt wird jede einzelne visuelle Darstellung einer rechnerischen Bildentzerrung unterzogen. Hierbei wird vorteilhaft das aus der analytischen Fotogrammetrie bekannte Verfahren zur Erstellung eines Orthofotos angewendet. Dabei wird jeder einzelne Bereich der visuellen Darstellung individuell entzerrt (differentielle Entzerrung). Hierdurch kann die in der visuellen Darstellung vorhandene Zentralprojektion in eine Orthogonalprojektion transformiert werden, wodurch die genaue Messung von Distanzen in der visuellen Darstellung möglich wird. Bei der Entzerrung wird die bereits bautechnisch bekannte Topographie des Ofeninnenraumes, also gegebenenfalls vorhandene Erhöhungen oder Vertiefungen an den Ofenwänden, mit berücksichtigt. Nach Bildentzerrung werden Abstandsmessfehler, welche in einem in die individuelle Darstellung eingetragenen kartesischen Koordinatensystem auftreten, verringert.

Insbesondere ist bevorzugt, dass visuelle Darstellungen in regelmäßigen zeitlichen Intervallen unter realen Betriebsbedingungen erstellt werden. So kann beispielsweise eine wiederholte Inspektion an der Thermoprozessanlage alle sechs Monate stattfinden, wodurch bautechnische Veränderungen im Ofeninnenraum dokumentiert werden können. Hier bietet sich entweder der mobile Einsatz des Inspektionssystems an, wobei die erforderlichen Abbildungsgeräte nur für die jeweilige Inspektion montiert und ausgerichtet werden müssen. Alternativ kann ein stationärer Einsatz angedacht sein, welcher die Inspektion auch spontan zu jedem gewünschten Zeitpunkt zulässt.

Als Alternative zur Inspektion unter realen Betriebsbedingungen kann das erfindungsgemäße Verfahren im Zeitpunkt eines instationären Vorgangs angewendet werden. Dadurch, dass mindestens eine visuelle Darstellung unter Verwendung von Infrarotmesstechnik während des Anfahrens oder Abfahrens der Thermoprozessanlage erstellt wird, kann die Überwachung des Innenraumes im nicht sichtbaren Wellenlängenbereich (>950 nm, z. B. 7 bis 14 µm) im Temperaturbereich bis 800 °C erfolgen. Dadurch werden die Bauteile des Innenraumes in ihrem bautechnischen und thermischen Zustand sichtbar gemacht und können auf den Anspruch einer gleichmäßigen Temperatureinwirkung beobachtet werden. Dazu wird eine Infrarotkamera unter speziellen technisch eingerichteten Kühlbedingungen in den Prozessraum oder an entsprechende Öffnungen eingefahren, um Bildaufnahmen der inneren Bauteilzustände auszuwerten. Durch die erfindungsgemäße Vermessungsmethode ist es möglich, die Lage der Temperaturfelder an den Wandflächen, bevorzugt in einem Koordinatensystem, zu bestimmen und lokale inhomogene Temperaturausbildungen an den Wandflächen gezielt identifizieren zu können.

Besonderen praktischen Nutzen hat die Anwendung dieses Verfahrens beim Erkennen so genannter Hotspots. Beim Aufheizen der Thermoprozessanlage wird ein Trocknungsprozess durchlaufen, bei welchem Feuchtigkeit in Mauersteinen und Fugen, hervorgerufen durch Lagerung und Mörtel-Masse-Verarbeitung, durch die langsame Temperaturerhöhung bei zirka 100 bis 120 °C ausgetrieben wird. Örtliche Temperaturerhöhungen durch die Temperaturvorgabe des Trocknens, welche zu Dampfbildungen in der Bauteilwand und dadurch zu örtlichen Schädigungen führen können, werden durch das erfindungsgemäße Verfahren rechtzeitig identifiziert.

Zur Gewährleistung einer hohen Qualität der auf Grundlage des erfindungsgemäßen Verfahrens gemachten Aussagen ist eine sehr hohe optische Qualität des benutzten Abbildungsgerätes erwünscht (Schärfe, Auflösung, Kontrast). Insbesondere für die Charakterisierung des bautechnischen Zustandes des Ofeninnenraumes unter Betriebsbedingungen muss sich die optische Qualität auf einem derart hohen Niveau befinden, dass beispielsweise Fugen, Risse und Kanten, deren Breite kleiner als 10 mm ist, im Abstand bis zu 20 m von der Einbaustelle des Abbildungsgerätes in der visuellen Darstellung sicher erkannt werden können. Das Abbildungsgerät zur Ausführung des erfindungsgemäßen Verfahrens umfasst eine optische Sonde mit Kamerasystem und ein Kühlmodul. Bevorzugt ist vorgesehen, dass die optische Sonde einen in den Innenraum der Thermoprozessanlage einführbaren Teil umfasst, dessen Außendurchmesser weniger als 38 mm, bevorzugt weniger als 36 mm aufweist. Außerdem ist das Abbildungsgerät in ein System integriert, welches eine Visualisierungs-, Archivierungs-, Datenverarbeitungs- und Auswerteeinheit auf Basis von Video- und CD-Aufzeichnungen umfasst. Der von der Kamera detektierte Wellenlängenbereich reicht von 200 bis 1050 nm. Dadurch werden bildhafte Darstellungen des Ofeninnenraumes sowie messtechnische Visualisierungen der Temperaturfelder sowie eine Flammendiagnose möglich. Die mithilfe der Kamera aufgezeichneten thermographischen Bilder dienen zur Charakterisierung des Innenraumes von Thermoprozessanlagen für Temperaturen von 800 bis 1800 °C. Durch den Zusatz von Ergänzungsmodulen wird der Einsatz unterschiedlicher Filtertechniken im Messbetrieb ermöglicht, z. B. eines Infrarotsperrfilters, eines 308-nm-UV-Filters oder eines Wärmeschutzfilters. Damit können z. B. bei Ofenraumtemperaturen größer als 1000 °C störende Hintergrundstrahlung eliminiert und nur OH-Verbrennungsradikale der Flammen bildhaft dargestellt werden.

Das erfindungsgemäße Verfahren kann schließlich dazu verwendet werden, räumliche Temperaturfelder im Inneren einer Thermoprozessanlage zu ermitteln, welche als Daten in ein Prozessleitsystem eingespeist werden. Die Erfindung betrifft somit auch ein Prozessleitsystem für den Betrieb einer Thermoprozessanlage, das mindestens einen Regelkreis umfasst, welcher eingerichtet ist, unter Verwendung des erfindungsgemäßen Verfahrens visuelle Darstellungen von räumlichen Temperaturfeldern zu ermitteln, diese mit Soll- oder Ist-Temperaturfeldern zu vergleichen und Stellgrößen in Abhängigkeit des Vergleichswertes zu ändern.

Die Erfindung betrifft weiterhin ein Computerprogramm, das es einer Datenverarbeitungseinrichtung ermöglicht, nachdem es in den Speicher der Datenverarbeitungseinrichtung geladen worden ist, das erfindungsgemäße Verfahren durchzuführen, wobei ein die elektromagnetischen Wellen detektierendes Abbildungsgerät visuelle Darstellungen an die Datenverarbeitungseinrichtung liefert und eine Bildauswertung auf einer der visuellen Darstellungen ausgeführt wird. Insbesondere wird ein Koordinatensystem in der visuellen Darstellung eingetragen und kalibriert. Einzelne Punkte können auf einem Monitor markiert werden und dienen zur Grundlage von Abstandsmessungen bestimmter Objekte oder zur Bestimmung von deren Position oder relativen Änderung im Koordinatensystem.

Außerdem ist erfindungsgemäß ein computerlesbares Speichermedium vorgesehen, auf dem ein Programm gespeichert ist, das es einer Datenverarbeitungseinrichtung ermöglicht, nachdem es in den Speicher der Datenverarbeitungseinrichtung geladen worden ist, das erfindungsgemäße Verfahren durchzuführen, wobei ein die elektromagnetischen Wellen detektierendes Abbildungsgerät visuelle Darstellungen an die Datenverarbeitungseinrichtung liefert und eine Bildauswertung auf einer der visuellen Darstellungen ausgeführt wird.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Prinzipdarstellung des Basissystems mit den zur Ausführung des erfindungsgemäßen Verfahrens notwendigen Systemkomponenten;
- Figur 2: schematisch die Erstellung von visuellen Darstellungen in einem Ofeninnenraum;
- Figur 3: die visuelle Darstellung des Ofeninnenraumes einer gasbeheizten Glasschmelzwanne;
- Figur 4: dieselbe visuelle Darstellung mit hinterlegtem Koordinatensystem;
- Figur 5: dieselbe visuelle Darstellung mit charakteristischen Distanzen;
- Figur 6: die visuelle Darstellung einer Flamme im Ofeninnenraum;
- Figur 7: dieselbe visuelle Darstellung mit hinterlegtem Koordinatensystem;
- Figur 8: ein thermographisches Bild der Flamme.
- Figur 9: eine Darstellung von Figur 8 in Isothermen;
- Figur 10: ein thermographisches Bild eines Ofeninnenraumes beim Anfahren der Thermoprozessanlage und
- Figur 11: ein Prozessleitsystem.

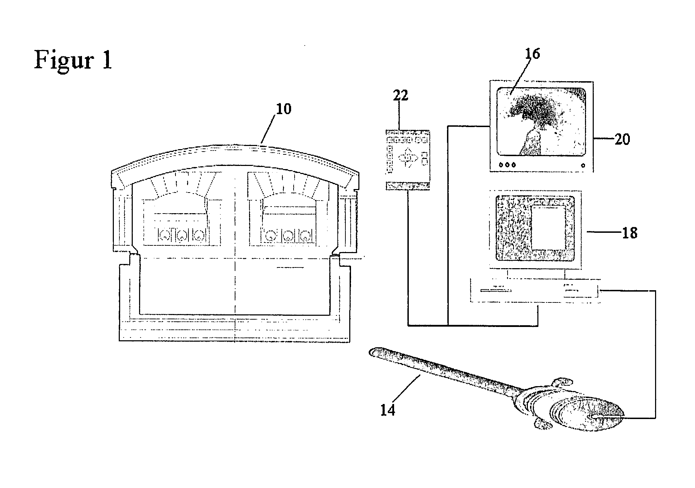

Figur 1 stellt die wesentlichen Systemkomponenten eines Basissystems zur Realisierung des erfindungsgemäßen Verfahrens dar. Eine Thermoprozessanlage 10, in dem dargestellten Ausführungsbeispiel eine Glasschmelzwanne, befindet sich im Betriebszustand. Dabei wird ein in der Figur 1 nicht dargestellter Innenraum 12 gemäß dem erfindungsgemäßen Verfahren geometrisch vermessen. Ein Abbildungsgerät 14 in Form einer optischen Beobachtungssonde detektiert elektromagnetische Wellen im Wellenlängenbereich von zirka 200 bis 950 nm und liefert speicherfähige visuelle Darstellungen 16 des Ofenraumes 12, welche als Standbild oder auch als Video, bevorzugt in digitaler Form, vorliegen. Eine Datenverarbeitungsvorrichtung 18 speichert die visuellen Darstellungen 16 und führt gegebenenfalls eine digitale Bildverarbeitung durch. An die Datenverarbeitungsvorrichtung 18 sind außerdem ein Monitor zur Visualisierung 20 sowie eine manuelle Bedienung 22 angeschlossen, mithilfe derer die Ausrichtung der Beobachtungssonde modifiziert und das Erstellen der visuellen Darstellungen 16 kontrolliert werden kann.

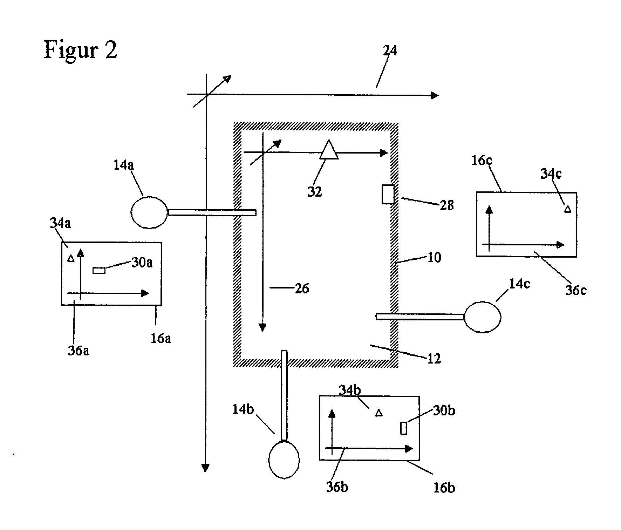

Figur 2 zeigt schematisch die Positionen von Beobachtungssonden 14a, b, c an der Außenwand eines Prozessraumes 12 einer Thermoprozessanlage 10. Die Beobachtungssonden 14, welche nach einem Periskopprinzip arbeiten, werden an der Außenwand der Thermoprozessanlage 10 montiert und nivelliert, so dass ihre exakte Position und Ausrichtung und somit ihre Sichtwinkel in den Prozessraum 12 bezüglich eines vorbestimmten, äußeren Koordinatensystems 24 bekannt sind. Die Beobachtungssonden 14 sind dabei bevorzugt senkrecht zu einer Wand des Prozessraumes 12 ausgerichtet. Die Beobachtungssonden 14 verbleiben in der Montageposition entweder nur während einer begrenzten Inspektionszeit, falls die Untersuchung nur vereinzelt oder in regelmäßigen Abständen gewünscht ist (mobiler Einsatz), oder ständig (stationärer Einsatz). Bei einem mobilen Einsatz müssen reproduzierbare Einbaubedingungen gewährleistet werden, um zuverlässige Aussagen auf der Basis von zu unterschiedlichen Zeitpunkten durchgeführten Messungen machen zu können. Die präzise Ausrichtung der Beobachtungssonden 14 geschieht mithilfe eines nicht dargestellten Sondenfixiersystems mit vertikaler, horizontaler und winkelorientierter Ausrichtungsmöglichkeit für reproduzierbare Einbaubedingungen an der Ofenanlage. Eine Grobjustierung geschieht beispielsweise durch eine Skalierung im Zentimeterabstand am nicht dargestellten Kühlmodul, und eine Fixierung beispielsweise mechanisch mittels Spreizen, Kugelgelenken und Schellen. Eine Feinjustierung wird über die Festlegung von Fixpunkten im Prozessraum 12 und Abgleich dieser über eine Kontrollmatrix auf dem Monitor 20 erreicht.

Mithilfe der Beobachtungssonden 14a, b, c werden visuelle Darstellungen 16a, b, c erstellt, welche jeweils einen Teil des Prozessraumes 12 repräsentieren. Im Prozessraum 12 befindet sich ein Bezugspunkt 28, dessen Position, insbesondere seine Lage im äußeren Koordinatensystem 24, bautechnisch bekannt ist. Im Allgemeinen ist der Bezugspunkt 28 Element eines Bezugsobjektes, wie beispielsweise einer Kante, einer (sichtbaren) Öffnung, einer Fuge oder dergleichen. Bei der Berechnung der Position des Bezugspunktes 28 im äußeren Koordinatensystem 24 wird die thermische Dehnung der Gesamtheit aller Bauteile berücksichtigt. In den visuellen Darstellungen 16a, b finden sich die Abbildungen 30a, b des Bezugspunktes 28. Um die Position eines wählbaren Punktes 32 im Prozessraum 12 zu bestimmen, werden die Abbildungen des wählbaren Punktes 34a, b mit den Abbildungen des Bezugspunktes 30a, b bezüglich ihrer Lage in den visuellen Darstellungen 16a, b verglichen.

Bevorzugt wird nicht nur ein einzelner Bezugspunkt 28 gewählt, sondern eine Vielzahl, so dass aus der Kenntnis mehrerer bautechnisch bekannter Positionen ein inneres Koordinatensystem 26 definiert und kalibriert werden kann. Das innere Koordinatensystem 26 kann zweidimensional (beispielsweise, wenn nur eine Wand des Prozessraumes 12 betrachtet wird) oder dreidimensional sein. Die Abbildung der Bezugspunkte 30 (oder wenigstens eines ausgedehnten Bezugsobjektes) definiert sodann auch ein (projiziertes) Koordinatensystem in den visuellen Darstellungen 16. Die gesuchten Positionen der zu untersuchenden Punkte/Objekte 32 können dann leicht aus ihrer Lage in den Koordinatensystemen 36 der visuellen Darstellungen abgelesen werden.

Praktisch werden zur Bestimmung des inneren Koordinatensystems 26 an der Außenseite der Thermoprozessanlage 10 die Beobachtungssonden 14 nach den bekannten Projektdaten nivelliert und fixiert, so dass beispielsweise sein Ursprung bestimmt ist. In den visuellen Darstellungen 16 wird mithilfe einer geeigneten Software ein Koordinatensystem 36 eingetragen, wobei in den visuellen Darstellungen 16 sichtbare Elemente, deren Positionen bautechnisch bekannt sind (Fugen, Kanten und dergleichen, siehe oben), zur Bestimmung des Ursprungs des Koordinatensystems 36 und für seine Kalibrierung benutzt werden. Neben der Abspeicherung der visuellen Darstellungen 16 wird auch die Orientierung und Kalibrierung der zugehörigen Koordinatensysteme 36 abgespeichert, um bei der Auswertung späterer Messungen zur Verfügung zu stehen. Die Gesamtheit dieser Daten sowie die dadurch erfassten maßstabsbezogenen, bautechnischen Informationen werden in Bilddokumenten und Metadaten in Datenbanken hinterlegt.

Dadurch, dass visuelle Darstellungen 16 aus mehreren Betrachtungsrichtungen angefertigt werden, können unter Verwendung eines aus der Vermessungstechnik bekannten stereometrischen Verfahrens ein räumliches Modell erzeugt und die Fehler der zu bestimmenden Koordinaten des zu untersuchenden Objektes 32 minimiert werden.

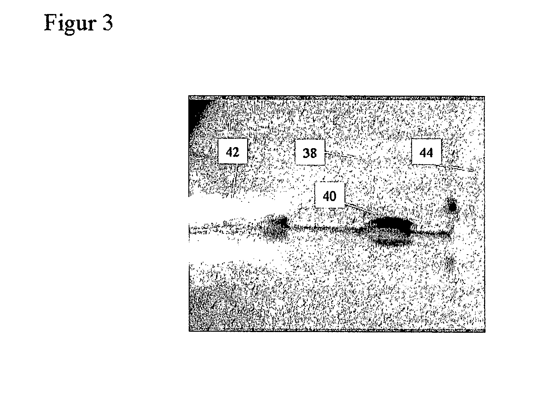

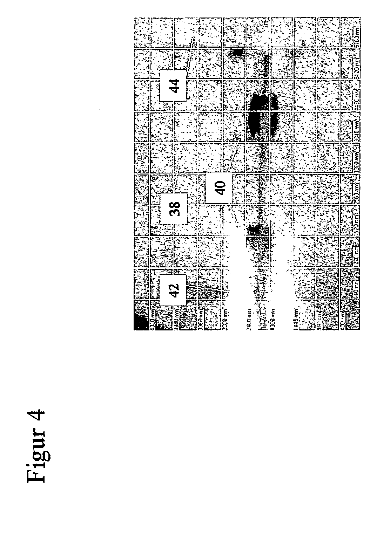

Figur 3 zeigt das Bild eines Prozessraumes 12 einer gasbeheizten Glasschmelzwanne. In einer Gewölbestirnwand 38 sind rechts und links jeweils Einlegevorbauten 40 angeordnet, wo zu verarbeitende Rohstoffe eingelegt werden. Auf der linken Seite der quer beheizten Anlage sind eine Flamme 42 und am rechten Bildrand ein gegenüberliegendes Brennermaul 44 erkennbar. Der aus der ursprünglichen Konstruktion der Thermoprozessanlage 10 (Projekt, Bauabnahme) bekannte räumliche Verlauf der Kanten der Gewölbestirnwand 38 dient zur Kalibrierung eines (projizierten) zweidimensionalen Koordinatensystems 36, mithilfe dessen Entfernungen und Abstände auf der Gewölbestirnwand 38 gemessen werden können, wie dies Figur 4 illustriert.

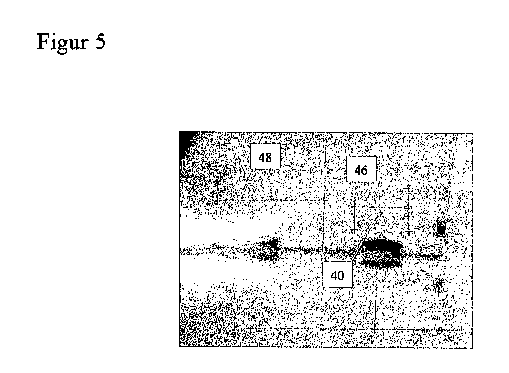

Bevorzugt wird eine visuelle Darstellung 16 in einem speziell angefertigten Computerprogramm abgebildet, wobei der Benutzer des Computerprogramms mit der Mouse relevante sichtbare Punkte im Bild markieren kann (vgl. Figur 5). Das Computerprogramm rechnet auf Grundlage des erfindungsgemäßen Verfahrens Abstände zwischen den markierten Punkten und/oder deren Orientierung aus. Die in Figur 5 gezeichneten Abstände zwischen relevanten Punkten, welche vom Computerprogramm berechnet werden, sind unter anderem: die Gewölbescheitelhöhe 46, die mittlere Ofenraumbreite 48 und die Breite des Einlegevorbaus 50. Des Weiteren sind auch die Positionen willkürlich gewählter Punkte bestimmbar.

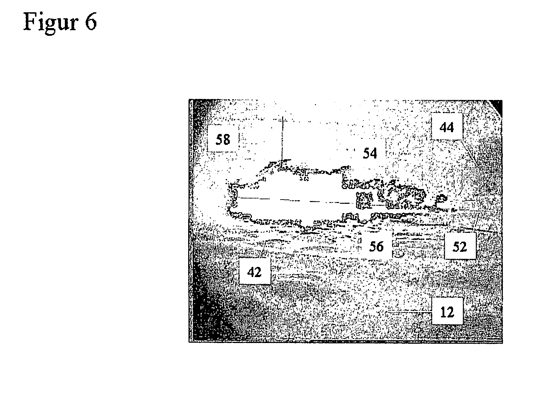

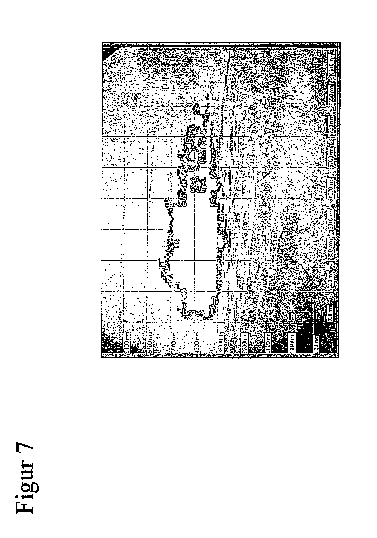

Figur 6 ist die visuelle Darstellung der Flamme 42 im Prozessraum 12. Sie entsteht als so genanntes integrales Flammensignal durch die Überlagerung mehrerer Momentanaufnahmen über einen frei wählbaren Zeitraum (beispielsweise 0,1 bis 100 s). In der visuellen Darstellung sichtbare Passpunkte im Sinne von Bezugsobjekten 28 sind in diesem Fall das Brennermaul 44 mit einem darunter angeordneten Düsenstein 52, dessen Koordinaten aus der Konstruktion genau bekannt sind und an welchem die Flammenwurzel entsteht; des Weiteren ein Widerlager 54, welches die Seitenenden des Überbaus abstützt und dessen räumlicher Verlauf ebenfalls bekannt ist. Aus den genannten bekannten Maßen kann ein Koordinatensystem kalibriert und in die visuelle Darstellung 16 eingezeichnet werden, wie es Figur 7 zeigt. Das in Figur 7 gezeigte Koordinatensystem bezieht sich auf die Ebene, in welcher die Flamme 42 verläuft.

Figur 6 zeigt außerdem, wie charakteristische Abstände wie die Flammenlänge 56 und der Abstand 58 zwischen Flamme und Widerlager 54 bestimmt werden können. Dabei macht man sich zunutze, dass die Flammenachse 56 durch die Position und Orientierung der (nicht dargestellten) äußeren Brennerlanze definiert wird. Die Verlängerung der Achse der äußeren Brennerlanze durch den Düsenstein 52 bestimmt die Ausrichtung des Brennstoffstrahles und somit auch die Orientierung der Flammenachse 56. Entlang dieser Achse kann eine Entfernung und somit die Flammenlänge 56 bestimmt werden. Dabei wird die Winkelbeziehung zwischen der Flammenachse 56 und der Ausrichtung der Beobachtungssonde 14 deutlich.

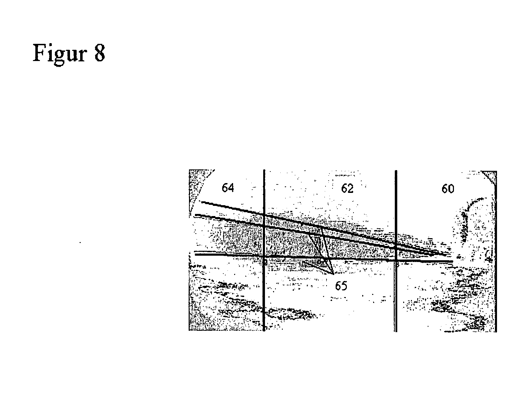

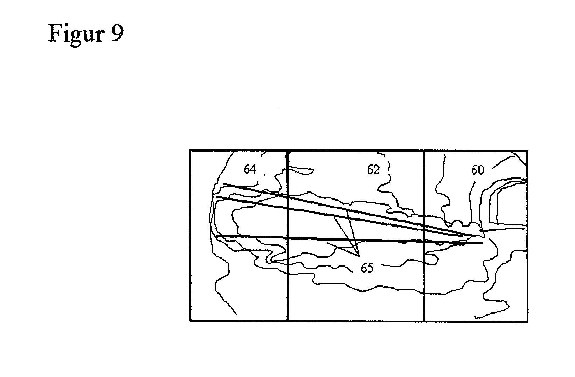

Figur 8 ist ein thermographisches Abbild der Flamme 42 im Prozessraum 12 (Figur 9 stellt die entsprechenden Isothermen des Temperaturfeldes schematisch dar). Die in Figur 8 eingezeichneten Vertikallinien grenzen einen Einschmelzbereich 60, einen Läuterbereich 62 und einen Abstehbereich 64 voneinander ab. Entlang beliebig wählbarer Messachsen 66 wird in nicht dargestellten Histogrammen der abgeschätzte Temperaturverlauf innerhalb der Flamme 42 dargestellt. Auf diese Weise kann die lokale Energiedichte in der Flame 42 maßstabsgetreu vermessen werden, wobei durch die Anwendung des erfindungsgemäßen Verfahrens die räumliche Orientierung der Messachsen 66 bekannt ist.

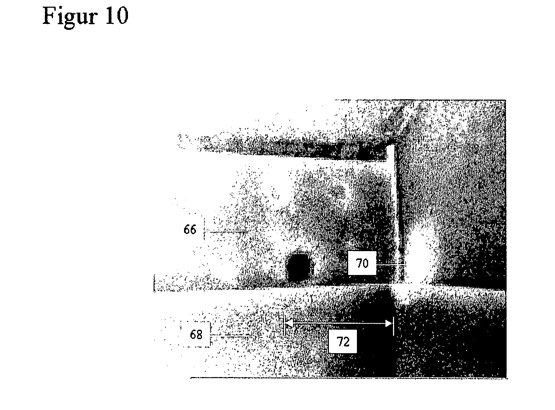

Figur 10 zeigt ein thermographisches Abbild des Prozessraumes 12 während des Anfahrens des Betriebszustandes der Thermoprozessanlage 10. Durch Verwendung einer Infrarotmesstechnik wird die Sichtbarmachung eines ansonsten unbekannten Zustandes ermöglicht, durch welchen eine Korrektur des Anfahrprozesses im Sinne einer Vergleichmäßigung erfolgen kann. Der Prozessinnenraum 12 umfasst eine Seitenwand 66, eine Bassinwand 68 und eine Brenneröffnung 70. Nach einer geometrischen Vermessung gemäß dem erfindungsgemäßen Verfahren können die visualisierten Temperaturfelder geometrisch ausgewertet werden. Mit dem Stand der Technik sind derartige quantitative Aussagen nicht möglich, da der unbekannte, nicht sichtbare Betriebszustand bei einer Temperatur um 500 °C aufgrund eines Mangels an Messfühlern nicht charakterisiert werden kann. In Figur 10 ist als Beispiel die Messung der Ausdehnung eines Temperaturfeldes 72 innerhalb eines bestimmten Temperaturintervalls markiert.

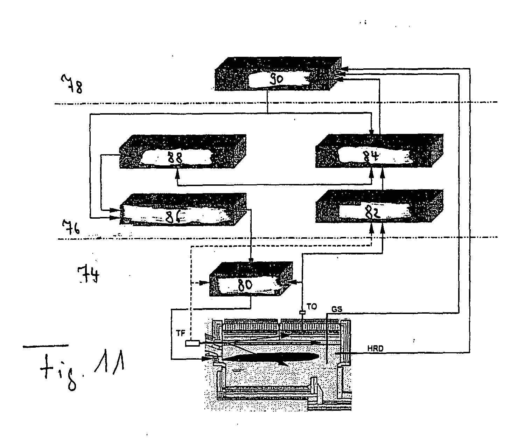

Figur 11 zeigt ein Prozessleitsystem mit einer Regelungsebene 74, einer Führungsebene 76 und einer Ausgleichsebene 78. Das System umfasst folgende Komponenten: eine Regelungseinheit 80, eine Interpolationseinheit 82, eine Beobachtungseinheit 84, eine Sollwertumformungseinheit 86, eine Berechnungseinheit 88 sowie eine Korrektureinheit 90.

Hinsichtlich des Regelkonzeptes des Prozessleitsystems werden als Sollwert nicht eine Temperaturpunktmessung im Ofenraum, sondern ein oder mehrere für das Ofenregime realistischere Temperaturfelder verwendet. Beginnende Veränderungen an einer bestimmten Zone werden erkannt und ausgeglichen, bevor die Wirkung aller Einflussfaktoren der Temperaturveränderung an der Thermoelementmessung erfasst wird. Der Arbeitsbereich der Temperaturfeldauswertung wird wie folgt definiert:
Flammenbereich: 1600 - 2000 °C, Sollbereich: ±100 K,
Ofenwandbereich: 1450 - 1600 °C, Sollbereich: ±10 K.

Die aus dem Stand der Technik bekannten Regelkreise (Temperaturführung, Regelgrößen, Verbrennungsmedien) bleiben unverändert erhalten und übernehmen als Sicherheitsregelung die ursprüngliche Funktion bei Grenz- bzw. Sollwertüberschreitungen bzw. bei Ausfall der Onlineregelung. Die Bildverarbeitung soll einen internen Soll/Ist-Vergleich vornehmen: innerhalb des Sollbereiches erfolgt die Ausgabe des Temperaturflächensignals; bei Verlassen des Sollbereiches erfolgt eine Abschaltung der Bildverarbeitung bzw. Umschaltung auf die parallel arbeitende konventionelle Thermoelementmessung mit Übernahme der Temperaturregelgröße. Die Führungsstrategie für die Regelung von Glasschmelzwannen gliedert sich im Allgemeinen in drei Wirkkreise, nämlich in die Regelungsebene 74, in die Führungsebene 76 und in die Ausgleichsebene 78. Der Regelkreis beinhaltet den Glasschmelzofen und die Regelarmaturen. An der Schmelzwanne werden die festgelegten Temperaturfelder TF und die Oberofentemperatur TO sowie Glasstand GS und Herdraumdruck HRD als Regelgrößen gemessen. Dabei gilt grundsätzlich, dass in der ersten Ebene die Oberofentemperatur TO und in der zweiten Ebene Glasstand GS und Herdraumdruck HRD steht. In der Regelungseinheit wird die Regelgröße mit einem Sollwert verglichen und die Heizleistung so verändert, dass der Sollwert eingehalten wird. Diese Lösung ist Stand der Technik. Das erfindungsgemäße Prozessleitsystem zeichnet sich dadurch aus, dass auf die erste Ebene quasi als erweitertes Abbild der Oberofenbedingungen die Temperaturfelderfassung TF aufgesetzt wird. Damit erfolgt keine grundlegende Änderung des Regelgeschehens, sondern eine Verbesserung der Regelgüte. In der Führungsebene 76 werden die zeitlichen Sollwertfunktionen jedes einzelnen Regelkreises, entsprechend der an den Prozess gestellten Forderungen, berechnet. Für die Reaktion auf Störgrößen, hier die Prozessdaten von Herdraumdruck und Glasstand, ist die Ausgleichsebene 78 zuständig.

### Bezugszeichen

- 10: Thermoprozessanlage/Glasschmelzwanne
- 12: Prozessraum/Ofenraum/Innenraum
- 14: Abbildungsgerät/Beobachtungssonde
- 16: visuelle Darstellung
- 18: Datenverarbeitungsvorrichtung
- 20: Monitor zur Visualisierung
- 22: manuelle Bedienung
- 24: (äußeres) Koordinatensystem
- 26: (inneres) Koordinatensystem
- 28: Bezugspunkt/Bezugsobjekt
- 30: Abbildung des Bezugspunktes
- 32: wählbarer Punkt/zu untersuchendes Objekt
- 34: Abbildung des wählbaren Punktes
- 36: Koordinatensystem in der visuellen Darstellung
- 38: Gewölbestirnwand
- 40: Einlegevorbau
- 42: Flamme
- 44: Brennermaul
- 46: Gewölbescheitelhöhe
- 48: mittlere Ofenraumbreite
- 50: Breite des Einlegevorbaus
- 52: Düsenstein
- 54: Widerlager
- 56: Flammenlänge/Flammenachse
- 58: Abstand zwischen Flamme und Widerlager
- 60: Einschmelzbereich
- 62: Läuterbereich
- 64: Abstehbereich
- 65: Messachse
- 66: Seitenwand
- 68: Bassinwand
- 70: Brenneröffnung
- 72: Ausdehnung eines Temperaturfeldes
- 74: Regelungsebene
- 76: Führungsebene
- 78: Ausgleichsebene
- 80: Regelungseinheit
- 82: Interpolationseinheit
- 84: Beobachtungseinheit
- 86: Sollwertumformungseinheit
- 88: Berechnungseinheit
- 90: Korrektureinheit

## Patentansprüche

1. Verfahren zur geometrischen Vermessung eines Innenraumes einer Thermoprozessanlage, wobei von einer Wandung des Ofenraumes der Thermoprozessanlage und/oder von im Innenraum der Thermoprozessanlage befindlichem Gut oder Materie generierte elektromagnetische Wellen erfasst werden,
mit folgenden Verfahrensschritten, wobei Verfahrensschritte a) und b) in umgekehrter Reihenfolge ausgeführt werden können:
a) Ermitteln der Position mindestens eines Bezugspunktes (28) im Innenraum (12) aufgrund von bautechnisch bekannten Daten,
b) Erstellen von mindestens zwei zweidimensionalen visuellen Darstellungen (16) zumindest eines Teiles des Innenraumes (12) mithilfe mindestens eines die elektromagnetischen Wellen zumindest teilweise detektierenden Abbildungsgerätes (14), wobei der Teil des Innenraumes (12) wenigstens den Bezugspunkt (28) und wenigstens einen wählbaren Punkt (32), dessen Position ermittelt werden soll, beinhaltet, und wobei die visuellen Darstellungen (16) aus verschiedenen Aufnahmerichtungen erstellt werden,
c) Ermitteln der dreidimensionalen Koordinaten des wählbaren Punktes (32) im Innenraum (12) durch Vergleich der Positionen der Abbildungen (34,30) des wählbaren Punktes (32) und des Bezugspunktes (28) in den mindestens zwei visuellen Darstellungen (16).

2. Verfahren nach Anspruch 1,
wobei
der wählbare Punkt (32) Bestandteil eines Objektes im Innenraum (12) ist, dessen Position, Orientierung, Größe oder dergleichen untersucht werden soll.

3. Verfahren nach einem der vorangehenden Ansprüche,
wobei
der Bezugspunkt Bestandteil eines bekannten Objektes im Innenraum (12) ist, insbesondere einer Fuge, Kante, Öffnung oder dergleichen.

4. Verfahren nach einem der vorangehenden Ansprüche,
wobei
beim Verfahrensschritt a) die Position von charakteristischen Linien, Geraden oder dergleichen ermittelt wird.

5. Verfahren nach einem der vorangehenden Ansprüche,
wobei
beim Verfahrensschritt a) die thermische Dehnung der Bauteile berücksichtigt wird.

6. Verfahren nach einem der vorangehenden Ansprüche,
wobei
im Verfahrensschritt a) ermittelte Positionen von charakteristischen Punkten, Linien, Geraden oder dergleichen benutzt werden, um in einer der im Verfahrensschritt b) erstellten visuellen Darstellungen (16) ein Koordinatensystem zu hinterlegen.

7. Verfahren nach einem der vorangehenden Ansprüche,
wobei
in einem zusätzlichen Verfahrensschritt die visuellen Darstellungen (16) einer rechnerischen Bildentzerrung unterzogen werden.

8. Verfahren nach einem der vorangehenden Ansprüche,
wobei
visuelle Darstellungen (16) in regelmäßigen zeitlichen Intervallen unter realen Betriebsbedingungen erstellt werden.

9. Verfahren nach einem der vorangehenden Ansprüche,
wobei
mindestens eine visuelle Darstellung (16) unter Verwendung von Infrarotmesstechnik während des Anfahrens oder Abfahrens der Thermoprozessanlage (10) erstellt wird.

10. Verfahren nach einem "der vorangehenden Ansprüche,
wobei
die Vermessung im sichtbaren Wellenlängenbereich von 400 - 950 nm, im Ultraviolettbereich von 200 - 400 nm oder im Infrarotbereich größer 950 nm durchgeführt wird.

11. Prozessleitsystem für den Betrieb einer Thermoprozessanlage,
das
welcher eingerichtet ist, mindestens einen Regelkreis umfasst, unter Verwendung eines Verfahrens gemäß einem der Ansprüche 1 bis 10 visuelle Darstellungen von räumlichen Temperaturfeldern zu ermitteln, diese mit Soll- oder Ist-Temperaturfeldern zu vergleichen und Stellgrößen in Abhängigkeit des Vergleichswertes zu ändern.

12. Computerprogramm, das es einer Datenverarbeitungseinrichtung ermöglicht, nachdem es in den Speicher der Datenverarbeitungseinrichtung geladen worden ist, ein Verfahren gemäß einem der Ansprüche 1 bis 10 durchzuführen,
wobei ein die elektromagnetischen Wellen detektierendes Abbildungsgerät visuelle Darstellungen an die Datenverarbeitungseinrichtung liefert und eine Bildauswertung auf einer der visuellen Darstellungen ausgeführt wird.

13. Computerlesbares Speichermedium, auf dem ein Programm gespeichert ist, das es einer Datenverarbeitungseinrichtung ermöglicht, nachdem es in den Speicher der Datenverarbeitungseinrichtung geladen worden ist, ein Verfahren gemäß einem der Ansprüche 1 bis 10 durchzuführen,
wobei ein die elektromagnetischen Wellen detektierendes Abbildungsgerät visuelle Darstellungen an die Datenverarbeitungseinrichtung liefert und eine Bildauswertung auf einer der visuellen Darstellungen ausgeführt wird.

## Claims

1. A method for geometrically surveying the inner space of a thermal processing unit with electromagnetic waves generated by a wall of the furnace chamber of the thermal processing unit and / by stock or matter located in the inner space of the thermal processing unit being captured, with the following process steps and it being possible that process steps a) and b) be carried out in reverse order :
a) determination of the position of at least one reference point (28) in the inner space (12) due to structurally known data,
b) preparation of at least two two-dimensional visual representations (16) of at least a part of the inner space (12) by means of at least an imaging apparatus (14) at least partly detecting the electromagnetic waves, with the part of the inner space (12) at least comprising the reference point (28) and at least a selectable point (32) the position of which is supposed to be determined, and with the visual representations (16) being prepared from different recording directions,
c) determination of the three-dimensional coordinates of the selectable point (32) in the inner space (12) by comparison of the positions of the images (34, 30) of the selectable point (32) and the reference point (28) in the at least two visual representations (16).

2. A method according to claim 1,
with the selectable point (32) being an integral part of an object in the inner space (12), the position, orientation, size or similar of which is supposed to be examined.

3. A method according to any one of the preceding claims,
with the reference point being an integral part of a known object in the inner space (12), in particular a joint, edge, opening or similar.

4. A method according to any one of the preceding claims,
with the position of characteristic lines, straight lines or similar being determined in process step a).

5. A method according to any one of the preceding claims,
with thermal expansion of the components being taken into account in process step a).

6. A method according to any one of the preceding claims,
with positions of characteristic points, lines, straight lines or similar determined in process step a) being used in order to provide a coordinate system in one of the visual representations (16) prepared in process step b).

7. A method according to any one of the preceding claims,
with the visual representations (16) in an additional process step being subjected to a calculated image restitution.

8. A method according to any one of the preceding claims,
with visual representations (16) being prepared in regular time intervals under real operating conditions.

9. A method according to any one of the preceding claims,
with at least a visual representation (16) being prepared by using infrared measuring methods during start-up or shutdown of the thermal processing unit (10)

10. A method according to any one of the preceding claims,
with surveying being carried out in the visible wavelength range of 400 to 950 nm, in the ultraviolet range of 200 to 400 nm or in the infrared range greater than 950 nm.

11. A process control system for the operation of a thermal processing unit
comprising at least one control loop established to determine visual representations of spatial temperature fields by using a method according to any one of claims 1 to 10, to compare them with set temperature fields or actual temperature fields, and to change correcting variables as a function of the comparative value.

12. A computer programme permitting a data processing unit after having
been loaded into the memory of the data processing unit to carry out a method according to any one of claims 1 to 10, with an imaging apparatus, which detects the electromagnetic waves, supplying visual representations to the data processing unit, and an image evaluation being carried out in one of the visual representations.

13. A machine-readable memory medium where a programme is saved permitting a data processing unit after having been loaded into the memory of the data processing unit to carry out a method according to any one of claims 1 to 10, with an imaging apparatus, which detects the electromagnetic waves, supplying visual representations to the data processing unit, and an image evaluation being carried out in one of the visual representations.

## Revendications

1. Procédé destiné à la mesure géométrique d'une cavité dans une installation de traitement thermique, des ondes électromagnétiques étant captées qui sont générées par un paroi de l'espace du four de l'installation de traitement thermique et / ou par du matériau ou de la matière se trouvant dans la cavité de l'installation de traitement thermique,
avec les étapes suivantes, les étapes a) et b) pouvant être réalisées en sens inverse :
a) détermination de la position d'au moins d'un point de référence (28) dans la cavité (12) en vertu des données connues de génie civil,
b) préparation d'au moins deux représentations visuelles de deux dimensions (16) d'au moins d'une partie de la cavité (12) au moyen d'au moins d'un appareil d'imagerie (14) détectant les ondes électromagnétiques au moins partiellement, la partie de la cavité (12) comportant au moins le point de référence (28) et au moins un point sélectable (32) dont la position doit être déterminée, les représentations visuelles (16) étant réalisées à partir des différentes directions d'enregistrement,
c) détermination des coordonnées à trois dimensions du point sélectable (32) dans la cavité (12) par comparaison des positions des images (34, 30) du point sélectable (32) et du point de référence (2) dans les au moins deux représentations visuelles (16).

2. Procédé selon la revendication 1,
le point sélectable (32) étant l'élément d'un objet dans la cavité (12) dont la position, l'orientation, la taille ou similaire doit être examinée.

3. Procédé selon l'une quelconque des revendications précédentes,
le point de référence étant l'élément d'un objet connu dans la cavité (12),
surtout d'un joint, d'un bord, d'une ouverture ou similaire.

4. Procédé selon l'une quelconque des revendications précédentes,
la position des lignes caractéristiques, des droites caractéristiques ou similaire étant déterminée dans l'étape a).

5. Procédé selon l'une quelconque des revendications précédentes,
la dilation thermique des composants étant considérée dans l'étape a).

6. Procédé selon l'une quelconque des revendications précédentes,
des positions des points caractéristiques, des lignes caractéristiques, des droites caractéristiques ou similaire déterminés dans l'étape a) étant utilisés pour prévoir un système de coordonnées dans une des représentations visuelles établies dans l'étape b).

7. Procédé selon l'une quelconque des revendications précédentes,
les représentations visuelles (16) dans une étape additionnelle étant soumises à une restitution d'image par le calcul.

8. Procédé selon l'une quelconque des revendications précédentes,
des représentations visuelles (16) étant réalisées dans des intervalles réguliers de temps sous des conditions réelles de fonctionnement.

9. Procédé selon l'une quelconque des revendications précédentes,
au moins une représentation visuelle (16) étant établie pendant le démarrage ou l'arrêt de l'installation de traitement thermique (10) en utilisant la technique de mesure infrarouge.

10. Procédé selon l'une quelconque des revendications précédentes,
la mesure étant réalisée dans la gamme des longueurs d'ondes visibles de 400 à 950 nm, dans la gamme ultraviolette de 200 à 400 nm ou dans la gamme infrarouge supérieure à 950 nm.

11. Système de contrôle de processus pour l'exploitation d'une installation de traitement thermique comprenant au moins un circuit de réglage qui est établi pour déterminer des représentations visuelles des champs spatiaux de température en utilisant un procédé selon l'une quelconque des revendications 1 à 10, les comparer avec des champs prescrits ou réels de température et modifier des grandeurs de commande en fonction de la valeur comparative.

12. Programme d'ordinateur permettant à une installation de traitement de données après avoir été chargé dans la mémoire de l'installation de traitement de données d'effectuer un procédé selon l'une quelconque des revendications 1 à 10, un appareil d'imagerie qui détecte les ondes électromagnétiques fournissant des représentations visuelles à l'installation de traitement de données et une analyse d'image étant réalisée sur l'une des représentations visuelles.

13. Support de mémoire lisible par l'ordinateur sur lequel un programme est mémorisé permettant à une installation de traitement de données de réaliser un procédé selon l'une quelconque des revendications 1 à 10, après avoir été chargé dans la mémoire de l'installation de traitement de données, un appareil d'imagerie qui détecte les ondes électromagnétiques fournissant des représentations visuelles à l'installation de traitement de données et une analyse d'image étant réalisée sur l'une des représentations visuelles.
